Europäisches Patentamt

European Patent Office

Office européen des brevets

(19)

(11) Veröffentlichungsnummer: **0 028 384**
**B1**

(12) EUROPÄISCHE PATENTSCHRIFT

(45) Veröffentlichungstag der Patentschrift:
22.02.84

(51) Int. Cl.³: **C 08 F 8/06** // C08F210/02

(21) Anmeldenummer: 80106567.3

(22) Anmeldetag: 25.10.80

(54) Oxidationsprodukte von Äthylen-Copolymerisaten und deren Verwendung.

(30) Priorität: 02.11.79 DE 2944375
15.12.79 DE 2950602

(43) Veröffentlichungstag der Anmeldung:
13.05.81 Patentblatt 81/19

(45) Bekanntmachung des Hinweises auf die Patenterteilung:
22.02.84 Patentblatt 84/8

(84) Benannte Vertragsstaaten:
AT BE CH DE FR GB IT LI NL SE

(56) Entgegenhaltungen:
DD - A - 116 625
DD - A - 125 131
US - A - 4 156 062

(73) Patentinhaber: HOECHST AKTIENGESELLSCHAFT,
Postfach 80 03 20, D-6230 Frankfurt am Main 80 (DE)

(72) Erfinder: Korbanka, Helmut, Dr., Birkenstrasse 24,
D-8901 Adelsried (DE)
Erfinder: Stetter, Karl-Heinz, Dr., Böhmerwaldstrasse 45,
D-8906 Gersthofen (DE)
Erfinder: Illmann, Günther, Dr., Holderstrasse 8,
D-8901 Stadtbergen (DE)
Erfinder: Jacob, Rolf, Dr., Adolf-von-Baeyer-Strasse 30,
D-8906 Gersthofen (DE)
Erfinder: Malitschek, Otto, Dr., Böhmerwaldstrasse 16,
D-8906 Gersthofen (DE)
Erfinder: Strehle, Josef, Talweg 11 1/2, D-8900 Augsburg
(DE)

# Oxidationsprodukte von Äthylen-Copolymerisaten und deren Verwendung

Es sind zahlreiche Verfahren zur Herstellung von polaren Wachsen durch Oxidation von Polyolefinen mit Sauerstoff oder sauerstoffhaltigen Gasen bekannt. Die Oxidation erfolgt dabei im allgemeinen in der Weise, daß das Polymere im festen oder im geschmolzenen Zustand mit sauerstoffhaltigen Gasen behandelt wird. Die Verfahren haben den Nachteil, daß sie entweder zu harten Wachsen, die aber hoch schmelzen und damit schwer verarbeitbar sind, oder zu niedrigschmelzenden, leicht verarbeitbaren, aber weichen Wachsen führen. Die harten, hochschmelzenden Wachse mit Schmelzpunkten über 105, in der Regel über 110° C, lassen sich z. B. nur mit erheblichem technischen Aufwand unter Überdruck bei Temperaturen über 100° C emulgieren. Die niedrigschmelzenden, leicht verarbeitbaren Wachse liefern im Gegensatz hierzu z. B. bei der Weiterverarbeitung auf Emulsionen aufgrund ihrer geringen Härte Präparate, die klebrige Filme mit hoher Schmutzaufnahme und unbefriedigender mechanischer Widerstandsfähigkeit ergeben.

Harte polare Wachse werden durch Oxidation von weitgehend unverzweigten Polyolefinen erhalten; sie sind immer hochschmelzend. Polare Wachse mit niederen Schmelzpunkten entstehen bei der Oxidation stärker verzweigter Polyolefine. Sie besitzen stets nur eine geringe Härte.

In der DE-PS 2 035 706 ist beispielsweise ein Verfahren beschrieben, bei dem Polyethylene bzw. Copolymere des Ethylens mit $C_3$- bis $C_8$-$\alpha$-Olefinen im geschmolzenen Zustand in wäßriger Dispersion mit sauerstoffhaltigen Gasen oxidiert werden. Nach diesem Verfahren lassen sich zwar u. a. auch sehr harte Wachse erhalten, diese weisen jedoch Schmelzpunkte von in der Regel deutlich mehr als 110° C auf und sind deshalb nur sehr schwer zu verarbeiten.

Aus der DE-PS 116 625 ist ein Verfahren zur Oxidation von Polyethylen oder Ethylencopolymerisaten mit Sauerstoff oder sauerstoffhaltigen Gasen bekannt, bei dem in die Polymerisatschmelze während der Oxidation ein flüssiger, gegenüber den Reaktanden inerter Zusatzstoff mit hoher Verdampfungswärme kontinuierlich eindosiert und mit den Reaktionsgasen wieder abgeführt wird. Geeignete Ethylenpolymere sind Polyethylenwachse mit Molekülmassen $\leq 15\,000$ sowie Ethylen-Vinylacetat-Copolymerisate mit Vinylacetatgehalten von 1 bis 45 Gew.-%. Nach diesem Verfahren werden zwar niedrig schmelzende, jedoch sehr weiche und klebrige Oxidationsprodukte mit Penetrationszahlen von in der Regel über 20 erhalten, was in besonders ausgeprägtem Maße für die Oxidate aus den bekanntlich stark verzweigtkettigen Ethylen-Vinylacetat-Copolymeren zutrifft.

Um die unbefriedigenden Eigenschaften der bekannten Oxidate zu verbessern, ist bereits vorgeschlagen worden, Polyethylenwachse mit Molekülmassen $< 15\,000$ in Abmischung mit hochmolekularen Homo- oder Copolymerisaten mit Molekülmassen $> 15\,000$ einer Schmelzoxidation zu unterwerfen (DD-PS 125 131). Die hierbei erhaltenen Oxidate sind inhomogen und außerdem wiederum entweder hochschmelzend mit Schmelzpunkten über 110° C oder weich mit Penetrationszahlen über 10. Zudem sind lange Reaktionszeiten erforderlich, was einen hohen Aufwand bedingt und zu einer thermischen Schädigung der Produkte führt. In der DD-PS 128 507 wird deshalb die Schmelzoxidation von u. a. Ethylen-Vinylacetat-Copolymerisaten unter Zusatz spezieller Metallkatalysatoren empfohlen. Auch hier kommt man nur zu hochschmelzenden oder zu weichen Wachsen, die außerdem infolge der enthaltenen Metallkatalysatoren Verfärbungen aufweisen.

Im Bestreben, qualitativ bessere, polare Wachse zu erhalten, hat man schließlich versucht, hochmolekulare Olefinhomo- oder mischpolymerisate zunächst unter Sauerstoffausschluß thermisch abzubauen und anschließend mit sauerstoffhaltigen Gasen in der Schmelze zu oxidieren (DD-PS 128 875). Auch auf diesem Wege gelingt es jedoch nicht, niedrigschmelzende, leicht verarbeitbare und gleichzeitig harte Wachse herzustellen. Außerdem ist dieses Verfahren aufgrund der erforderlichen zwei Verfahrensschritte unwirtschaftlich.

Der vorliegenden Erfindung lag daher die Aufgabe zugrunde, niedrigschmelzende und somit leicht verarbeitbare, jedoch gleichzeitig sehr harte Wachse in die Hand zu bekommen.

Überraschenderweise wurde gefunden, daß dies möglich ist, wenn man spezielle Ethylencopolymerisate mit Sauerstoff oder sauerstoffhaltigen Gasen im geschmolzenen Zustand in einem Dispersionsmittel verteilt oxidiert.

Die Erfindung betrifft demnach ein Verfahren zur Herstellung von niedrigschmelzenden, leicht verarbeitbaren und gleichzeitig harten polaren Wachsen durch Oxidation von Ethylencopolymerisaten mit Sauerstoff oder sauerstoffhaltigen Gasen, wobei eine in einem gegenüber Sauerstoff inerten Dispersionsmittel dispergierte Schmelze des Polymeren bei Temperaturen zwischen seinem Schmelzpunkt und 100° C darüber, bei einem Überdruck zwischen 0 und 100 bar und gegebenenfalls in Gegenwart von Netzmitteln und/oder Katalysatoren unter ständigem intensiven Vermischen mit Sauerstoff oder sauerstoffhaltigen Gasen behandelt wird, welches dadurch gekennzeichnet ist, daß solche Copolymerisate mit Schmelzindices zwischen 0,01 und 400 g/10 min eingesetzt werden, in denen neben Ethylen 0,5 bis 50 Gew.-% andere olefinische, jedoch sauerstoffhaltige Gruppen enthaltende Monomere einpolymerisiert sind.

Daß nach dem erfindungsgemäßen Verfahren niedrigschmelzende, leicht verarbeitbare und gleichzeitig sehr harte polare Wachse erhalten werden können, war nicht zu erwarten, da nach den bisherigen Erfahrungen angenommen werden mußte, daß entweder nur niedrigschmelzende, zwar leicht verarbeitbare, jedoch weiche Wachse oder aber nur hochschmelzende, schwer verarbeitbare und dann auch harte Wachse herstellbar sein würden. Als überraschend muß jedoch vor allem angesehen werden, daß sich Wachse mit so hoher Härte und anderen vorteilhaften Eigenschaften aus Polymeren mit höherem Verzweigungsgrad erhalten lassen würden, da nach den bisherigen Erfahrungen gerade beim Einsatz verzweigter Polymerer besonders weiche Wachse zu erwarten waren.

Nicht vorhergesehen werden konnte schließlich, daß es beim erfindungsgemäßen Verfahren, wenn nach der bevorzugten Arbeitsweise mit Wasser als Dispergiermittel gearbeitet wird, selbst in Gegenwart sehr großer Wassermengen zu keiner merklichen Hydrolyse der Estergruppierungen der eingesetzten Polymerisate kommt, d. h. Oxidate mit hohem Gehalt an anwendungstechnisch wertvollen Estern entstehen, die gegenüber bekannten Oxidaten zahlreiche verbesserte Eigenschaften aufweisen.

Das Verfahren geht von billig verfügbaren Rohstoffen aus. Die Umsetzung läuft auch ohne den Einsatz von produktschädigenden Katalysatoren schonend und äußerst rasch in einem einzigen Verfahrensschritt ab. Es entstehen helle, geruchlose und homogene Oxidate ohne vernetzte Anteile. Die Oxidate weisen niedere Tropfpunkte, gleichzeitig aber hohe Härten und zahlreiche andere vorteilhafte Eigenschaften auf. Sie lassen sich insbesondere mit verringertem Aufwand weiterverarbeiten und ergeben dabei Produkte mit verbesserten, neuartigen Gebrauchseigenschaften.

Unter Ethylencopolymerisaten im Sinne der Erfindung sind Copolymerisate des Ethylens zu verstehen, in die neben Ethylen 1 bis 50 Gew.-% andere olefinische Monomere, die sauerstofffunktionelle Gruppen enthalten, einpolymerisiert sind. Die Herstellung der Copolymerisate erfolgt nach bekannten Verfahren. Sie werden insbesondere durch radikalische Hochdruck-, Lösungs-, Suspensions- oder Emulsionspolymerisation erhalten. Die zu ihrer Herstellung neben Ethylen eingesetzten olefinischen Monomeren mit sauerstofffunktionellen Gruppen sind z. B. Vinylester von Carbonsäuren, wie Vinylacetat oder Vinylpropionat, ferner Vinylether oder $\alpha,\beta$-ethylenisch ungesättigte Carbonsäuren und deren Derivate, wie Acrylsäure, Methacrylsäure, Ethacrylsäure, Crotonsäure, Fumarsäure, Maleinsäure, Maleinsäureanhydrid, Itaconsäure, Mesaconsäure oder die Ester dieser Säuren. Die Copolymerisate können auch mehrere verschiedenartige Monomerkomponenten mit sauerstofffunktionellen Gruppen enthalten. Der Anteil des Monomeren mit sauerstofffunktionellen Gruppen am Copolymerisat beträgt 0,5 bis 50, vorzugsweise 1 bis 30 und insbesondere 1 bis 20 Gew.-%. Die Copolymerisate besitzen einen Schmelzindex zwischen 0,01 und 400, vorzugsweise zwischen 0,1 und 200 und insbesondere zwischen 0,1 und 100 g/10 min, bestimmt nach DIN 53 735 bei 190°C und einem Auflagegewicht von 2,16 kp (MFI 190/2). Die Molekülmassen derartiger Copolymerisate liegen im allgemeinen über 15 000. Die Copolymerisate können vor der Oxidation vollständig oder teilweise verseift werden. Ferner können die Copolymerisate im Gemisch miteinander oder im Gemisch mit anderen Polyolefinen und/oder synthetischen oder natürlichen Wachsen oder Paraffinen der Oxidation unterworfen werden.

Die Durchführung des Oxidationsverfahrens erfolgt im allgemeinen in der Weise, daß man das Ethylencopolymerisat in einem gegen Sauerstoff inerten Dispersionsmittel, gegebenenfalls in Gegenwart von Katalysatoren und/oder Netzmitteln, verteilt und bei einer Temperatur über dem Schmelzpunkt des Copolymerisats unter ständiger inniger Durchmischung der Reaktionskomponenten mit dem Reaktionsgas behandelt. Aufgrund der Verteilung im Dispersionsmittel gelingt es, das Polymere in intensive Berührung mit dem Reaktionsgas zu bringen, so daß es zu einer äußerst raschen und gleichzeitig schonenden Umsetzung kommt.

Als Dispersionsmittel dient vorzugsweise Wasser, danben können beispielsweise aber auch gesättigte Fettsäuren mit 2 bis 8 C-Atomen oder chlorierte Kohlenwasserstoffe u. dgl. eingesetzt werden. Das Dispersionsmittel wird, bezogen auf das Copolymerisat, in der 0,5- bis 20fachen, vorzugsweise in der gleichen bis 10fachen Gewichtsmenge angewandt. Mit dem Abgas entweichendes Dispersionsmittel wird nötigenfalls durch neues ersetzt. Zur Erleichterung der Dispergierung des Copolymeren können dem Reaktionsgemisch Netzmittel, beispielsweise Fettsäuren, Fettalkohole, Ethoxilierungsprodukte von Alkoholen bzw. Phenolen oder Metallseifen, Metallhydroxide oder Metallsalze, zugesetzt werden.

Zur Verringerung der Induktionszeit und zur Beschleunigung des Oxidationsvorganges kann die Umsetzung in Gegenwart von Katalysatoren vorgenommen werden. Als Katalysatoren eignen sich beispielsweise Peroxyverbindungen oder auch bereits oxidiertes Copolymerisat oder gebrauchtes Dispersionsmittel. Ferner kann man dem Oxidationsgas Ozon beimischen. Weiterhin können Metallverbindungen als Oxidationskatalysatoren zugegeben werden. Bei der Zugabe der letztgenannten Substanzen besteht jedoch die Gefahr, daß verfärbte und vernetzte Produkte entstehen. Wegen der im Vergleich zu bekannten Verfahren außerordentlich hohen Reaktionsgeschwindigkeit ist jedoch die Anwesenheit derartiger Katalysatoren im allgemeinen nicht erforderlich.

Die Reaktionstemperatur liegt über dem Schmelzpunkt des eingesetzten Copolymerisates und übersteigt den Schmelzpunkt um bis zu 100, vorzugsweise um bis zu 80°C. Die günstigsten Reaktionstemperaturen liegen zwischen 130 und 180, vorzugsweise 140 und 170°C. Die Temperaturführung bereitet keine Schwierigkeiten, da das eingesetzte Dispersionsmittel ein ideales

3

Medium für die Wärmezu- und -abführung ist. Die Wärmeabfuhr erfolgt unter Vermittlung des Dispersionsmittels sowohl über die Gefäßwände als auch über den Gasraum durch Verdampfungskühlung.

Man kann drucklos oder unter einem Überdruck bis zu 100 bar oxidieren. Die günstigsten Reaktionsdrücke liegen zwischen 5 und 100, insbesondere zwischen 5 und 30 bar Überdruck. Bevorzugtes Oxidationsmittel ist Luft, deren Sauerstoffgehalt sich gegebenenfalls durch Zugabe von Sauerstoff auch erhöhen läßt.

Die Oxidation kann nach Erreichen jedes beliebigen Oxidationsgrades abgebrochen werden. Die Trennung von Dispersionsmittel und Oxidationsprodukt bereitet keine Schwierigkeiten. Das Dispersionsmittel trennt sich beispielsweise beim Stehenlassen von der Oxidationsschmelze ab und kann dann abgelassen oder abgezogen werden. Die Abtrennung gelingt besonders gut, wenn bei niedrigen Temperaturen, beispielsweise bei 150°C, oxidiert wurde. Die Abtrennung kann auch durch die Zugabe von Emulsionsspaltern, z. B. Polymerisationsprodukten aus Propylenoxid und/oder Ethylenoxid begünstigt werden. Restliches Dispersionsmittel kann anschließend durch Verdampfen entfernt werden. Auch eine Sprühtrocknung der feuchten Produktschmelze ist möglich.

Nach dem erfindungsgemäßen Verfahren ist die Erzielung praktisch jedes in Betracht kommenden Oxidationsgrades möglich. Beispielsweise lassen sich Produktsäurezahlen bis zu 200 erzielen. Bei Ausgangsprodukten, die selbst keine Säurezahlen aufweisen, haben insbesondere Oxidate mit Säurezahlen zwischen 3 und 100, vorzugsweise zwischen 3 und 50, praktische Bedeutung. Welche Produktsäurezahlen im Einzelfalle optimal sind, hängt von der Art des Ausgangsproduktes und von der beabsichtigten Verwendung des Produktes ab. Da mit steigender Säurezahl die Härte der Oxidate abnimmt, wird man im allgemeinen keine höheren Säurezahlen anstreben als sie zur Erzielung anderer Eigenschaften, beispielsweise einer guten Emulgierbarkeit oder einer ausreichend niedrigen Schmelzviskosität, erforderlich sind. Hierzu sind bei Copolymerisaten mit höherem Ethylengehalt im allgemeinen höhere Säurezahlen notwendig als bei solchen mit niedrigerem Ethylengehalt.

Die neuen Oxidationsprodukte weisen bisher nicht bekannte Eigenschaftskombinationen auf. Die Produkte sind hell und geruchlos. Ihre Molekülmassen liegen im allgemeinen zwischen 200 und 20 000, vorzugsweise zwischen 400 und 8000, ihre Schmelzviskositäten zwischen 200 und 50 000, vorzugsweise zwischen 500 und 20 000 mPas (120°C). Die Molekülmassenverteilung ist eng. Die Oxidate sind deswegen in sich homogen und enthalten keine vernetzten Anteile. Die Tropfpunkte liegen unter 110°C, im allgemeinen unter 105°C, häufig unter 100°C. Trotzdem besitzen die Produkte ungewöhnlich hohe Härten. Ihre Nadelpenetration [bestimmt nach DGF-M-III 9b (75), referiert in »Fette, Seifen, Anstrichmittel« 68, S. 28 (1966)] ist in der Regel kleiner als 10 mm, meistens kleiner als 5 mm · 10⁻¹. Die Fließhärte, die nach einer internen Vorschrift bestimmt wird (Messung des Drucks, der erforderlich ist, um mittels eines planen, zylindrischen Metallstempels von 1 cm² Grundfläche in einem in ein Schälchen eingegossenen, zylindrischen Wachsplättchen von 13 mm Ø und 3 mm Dicke einen Eindruck zu erzielen), ist im allgemeinen größer als 200 bar, meistens größer als 400 bar. Dabei handelt es sich weniger um eine spröde als vielmehr um eine zähe Härte mit besonderen anwendungstechnischen Vorteilen. Die Produkte enthalten neben den durch Oxidation erzeugten, sauerstoffhaltigen Gruppierungen die aus dem Ausgangsprodukt stammenden Sauerstofffunktionen. Dies kommt beispielsweise bei Oxidaten von Ethylen-Vinylacetat-Copolymerisaten in den Esterzahlen zum Ausdruck, die unterschiedlich zu denen bekannter Polyethylenwachsoxide ein Vielfaches, beispielsweise das 1- bis 20fache, der zugehörigen Säurezahlen betragen. Die Kombination aus ursprünglich vorhandenen und durch Oxidation erzeugten Sauerstofffunktionen verleiht den Oxidaten eine besonders ausgewogene Polarität, die zu verbesserten anwendungstechnischen Eigenschaften führt. Die Oxidate zeichnen sich insbesondere durch gute Emulgierbarkeit, Glanzgabevermögen, Lösemittelbindefähigkeit, Pastenbildefähigkeit, Polierbarkeit, Haftvermögen und Verträglichkeit mit anderen Stoffen aus. Aufgrund dieser Eigenschaften sind die Oxidate auf zahlreichen Gebieten vorteilhaft einsetzbar.

Die Produkte eignen sich vorzugsweise zur Herstellung von wäßrigen Emulsionen. Die Emulgierung kann unter Druck oder — wegen der niedrigen Tropfpunkte der Oxidate — auch drucklos mit geringem technischen Aufwand erfolgen. Es entstehen feinteilige, hochtransparente Emulsionen mit erheblich verringerter Stippigkeit. Die Emulsionen trocknen zu Filmen mit hohem Selbstglanz auf und diese besitzen eine verbesserte Härte, Kratzfestigkeit, Abriebfestigkeit, Flexibilität, Bruchfestigkeit und Haftung auf dem Untergrund. Insbesondere zeichnen sie sich auch durch verringerte Schmutzaufnahme und erhöhte Rutschfestigkeit aus. Abgenutzte Filme können durch Polieren regeneriert werden. Die Emulsionen lassen sich vorteilhaft auf dem Putzmittelgebiet, z. B. in Selbstglanzemulsionen, verwenden. Daneben können sie beispielsweise auch auf dem Gebiet der Papierbeschichtung, Fruchtbeschichtung, Hydrophobierung und Ausrüstung von Textilien, Holz, Leder, Baustoffen und dgl. eingesetzt werden.

Die Produkte eignen sich weiterhin zur Herstellung von lösemittelhaltigen Polituren, Bohnermassen, Schuhcremes sowie von Korrosionsschutzmitteln, Beschichtungsmassen, Hotmelts, Asphaltzubereitungen, Klebstoffen, Farbaufschlüssen, Pigmentkonzentraten, Kohlepapierbeschichtungen, scheuerfesten Druckfarben, Lackmattierungen, Textilausrüstungen, Vergußmassen, Genaugußwachsen, kosmetischen Zubereitungen, Kerzen, Schmierfetten, Schmieröl-Additiven, Schmiermitteln für die Metallbearbeitung, Hilfsmitteln für die Kunststoffverarbeitung, beispielsweise Gleitmitteln oder Trennmitteln. Die Produkte verbessern in Zubereitungen allgemein die Verträglichkeit, Haftfähigkeit, Siegelfähigkeit, Fließfähigkeit und Undurchlässigkeit.

Was die bevorzugten Verwendungsmöglichkeiten der neuen Oxidato als Wachskomponente in Pflegemitteln auf wäßriger Basis, auf Lösemittelbasis, in wäßrigen, lösemittelhaltigen Emulsionen sowie in Pasten betrifft, so werden hierfür besonders solche Oxidate eingesetzt, die aus Ethylen-Vinylacetat-Copolymerisaten vom Schmelzindex 0,1 bis 200 g/10 min (bestimmt nach DIN 53 735 bei 190° C und einem Auflagegewicht von 2,16 kp [MFI 190/2]) mit einem Vinylacetatgehalt von 1 bis 30, vorzugsweise 5 bis 20 und insbesondere 5 bis 10 Gew.-% erhalten worden waren und Säurezahlen von 10 bis 50, vorzugsweise 15 bis 25, Schmelzviskositäten bei 120° C von 500 bis 20 000 mPas und Verseifungszahlen von 70 bis 140 besitzen. Bevorzugt werden Oxidate mit einer Säurezahl von 15 bis 20, einer Verseifungszahl von 80 bis 110 und einer Dichte bei 20° C von ca. 0,96 g/cm³. Die Fließhärte eines derartigen Oxidates liegt bei ca. 600 kg/cm² und die Schmelzviskosität bei ca. 1500 bis 5000, insbesondere bei ca. 2000 mPas.

In den unter Einsatz der neuen Oxidate rezeptierten Pflegemitteln beträgt die Wachsmenge, bezogen auf fertiges Pflegemittel, 0,01 bis 50 Gew.-%, wobei sich die niedrigen Konzentrationen auf die in hochverdünnter Form zur Anwendung kommenden Wischwachse beziehen, während in Pasten und Pflegemittelemulsionen die Wachsmengen zwischen 1 und 50 Gew.-% liegen. In den Präparaten können ferner in derartigen Pflegemitteln übliche, sich nach der Rezeptur und dem Einsatzzweck richtende weitere Bestandteile, wie z. B. andere Wachse, Paraffine, ionogene und/oder nichtionogene Emulgatoren, reinigend wirkende Stoffe, Lösemittel, Netz- und Verlaufmittel, Polymerdispersionen, Filmbildehilfsmittel, temporäre und permanente Weichmacher, Antistatika, Bakterizide, Konservierungsmittel, Farbstoffe, Metallsalze und Korrosionsinhibitoren enthalten sein.

Daß man beim Einsatz der Oxidate auf dem Putz- und Pflegemittelsektor zu überraschenden Ergebnissen kommen würde, war keineswegs vorhersehbar, nachdem aufgrund ihrer hohen Fließhärten, ebenso wie bei vergleichbaren Polyethylenwachsen zwar harte, schmutzabweisende und mechanisch widerstandsfähige, jedoch nicht rutschfeste Filme zu erwarten waren. Man mußte ferner damit rechnen, daß die Vinylacetat-Komponente in den Polymerisaten sich ungünstig auf andere Eigenschaften der Pflegemittelfilme, etwa deren Wasserfestigkeit und Alkalibeständigkeit, auswirkt. Daß im vorliegenden Falle die Pflegemittelfilme bei hoher Härte eine sehr gute Rutschfestigkeit besitzen, ohne in ihren anderen Gebrauchseigenschaften abzusinken, mußte auch den Fachmann in Erstaunen versetzen. Mit Hilfe der neuen Oxidate ist es somit möglich, das seit langem bestehende Bedürfnis nach Pflegemittelfilmen mit maximaler Gleitsicherheit und Flexibilität unter gleichzeitiger, optimaler Ausnutzung des technischen Fortschritts bezüglich Härte, Zähigkeit und Trittfestigkeit besser und in einfacherer Weise zu befriedigen, als dies beispielsweise durch die Inkorporierung rutschhemmender Zusätze, welche mancherlei andere Nachteile bringen, möglich ist [vgl. DE-OS 27 07 938; Braun und Roemer, Fette-Seifen-Anstrichmittel 76 (1974) Seite 169].

Die neuen Wachse können bei ihrer Verwendung schließlich auch mit anderen Wachsen, beispielsweise Esterwachsen, Paraffinwachsen, Mikrowachsen u. dgl., kombiniert werden. Daneben lassen sich die Oxidate für spezielle Anwendungen chemisch modifizieren, beispielsweise durch teilweise oder vollständige Veresterung mit ein- oder mehrwertigen Alkoholen und/oder durch Verseifung mit ein- oder mehrwertigen Metallionen, ferner durch Amidierung oder durch teilweise oder vollständige Hydrolyse oder Umesterung erhaltener Estergruppierungen. Auch eine oxidative Nachbehandlung der Oxidate ist möglich, beispielsweise mittels Wasserstoffperoxid oder Chromschwefelsäure.

Die folgenden Beispiele dienen der weiteren Erläuterung der Erfindung.


Beispiel 1

In einen 40-l-Kessel aus rostfreiem Stahl werden 20 l destilliertes Wasser, 7,6 kg eines Ethylen-Vinylacetat-Copolymerisats [Vinylacetat-Gehalt 8,5 Gew.-%, Dichte 0,928 g/cm³, Schmelzindex (MFI 190/2) 2,5 g/10 min] und als Katalysator 0,4 kg eines Oxidates des Ethylen-Vinylacetat-Copolymerisates mit einer Säurezahl von 18 eingefüllt. Der Kesselinhalt wird auf die Reaktionstemperatur von 150° C aufgeheizt. Während des Aufheizens wird damit begonnen, unter heftigem Rühren und unter Aufrechterhaltung eines Überdruckes von 15 bar durch das Gemisch einen Luftstrom von 3 Nm³/Stunde zu leiten. Nach Erreichen der Reaktionstemperatur werden aus dem Kessel durch direktes Entspannen laufend Proben entnommen, wobei die Proben in Form eines Sprühpulvers anfallen. Zur Beendigung der Oxidation werden die Luftzufuhr und der Rührer abgestellt. Es wird das sich absetzende Wasser vom Oxidationsprodukt abgetrennt und die Oxidatschmelze durch Verdampfen des Restwassers getrocknet. Die Eigenschaften der entnommenen Zwischenproben und des erhaltenen Endproduktes sind in Tabelle 1 wiedergegeben.

Die erhaltenen Oxidate sind bei Vorliegen von Säurezahlen von 15 oder mehr leicht emulgierbar. Es entstehen feinteilige, stippenfreie, hochtransparente Emulsionen, die mit hohem Selbstglanz auftrocknen. Die sich bildenden Filme sind extrem widerstandsfähig und rutschfest.

Tabelle 1

| Probe Nr. | Reaktions- zeit | Säurezahl | Verseifungs- zahl | Tropfpunkt | Farbe |
|---|---|---|---|---|---|
| | (Stunden) | (mg KOH/g) | (mg KOH/g) | (° C) | |
| 1 | 1,2 | 7 | 75 | 106 | weiß |
| 2 | 1,6 | 10 | 77 | 104 | weiß |
| 3 | 2,0 | 15 | 85 | 102 | weiß |
| 4 | 2,2 | 20 | 93 | 101 | weiß |
| 5 | 2,3 | 24 | 97 | 100 | weiß |
| 6 | 2,4 | 28 | 102 | 99 | weiß |
| 7 | 2,6 | 38 | 115 | 98 | fast weiß |
| 8 | 2,8 | 48 | 130 | 96 | leicht gelb |

Tabelle 1 (Fortsetzung)

| Probe Nr. | Schmelz- viskosität mPas | Molekül- masse | Nadel- penetration | Fließhärte bar | Dichte g/cm$^3$ | Vinyl- acetat- gehalt |
|---|---|---|---|---|---|---|
| | (120° C) | | (mm · 10$^{-1}$) | (20° C) | (20° C) | (Gew.-%) |
| 1 | — | 7 500 | 1 | 800—900 | 0,944 | 8,4 |
| 2 | 26 400 | 5 800 | 2 | 700—800 | 0,948 | 8,4 |
| 3 | 7 200 | 4 300 | 2 | 650—750 | 0,953 | 8,3 |
| 4 | 2 600 | 3 360 | 2—3 | 600—700 | 0,955 | 8,2 |
| 5 | 1 640 | 2 980 | 3 | 600—650 | 0,960 | 8,3 |
| 6 | 1 180 | 2 670 | 3—4 | 550—600 | 0,966 | 8,3 |
| 7 | 760 | 1 850 | 4 | 400—450 | 0,974 | 8,3 |
| 8 | 320 | 1 470 | 4—5 | 300—350 | 0,985 | 8,2 |

Beispiele 2 bis 21

Verschiedene Ethylen-Vinylacetat-Copolymerisate werden wie im Beispiel 1 oxidiert, wobei jeweils 2,375 kg Copolymerisat und 125 g zugehöriges Oxidat mit der Säurezahl 18 eingesetzt werden. In Tabelle 2 sind die Ausgangsprodukte und die Ergebnisse zusammengestellt.

Die Oxidate lassen sich beim Vorliegen von Schmelzviskositäten unter 7000 mPas (120° C) zu hervorragenden Emulsionen verarbeiten. Produkte mit höheren Schmelzviskositäten können durch Zusatz niedriger viskoser Wachse, beispielsweise Mikrowachse und/oder Esterwachse auf Naturwachsbasis, emulgiert werden.

Die Oxidate eignen sich auch ausgezeichnet als Gleitmittel bei der Kunststoffverarbeitung. Bei der PVC-Verarbeitung wirken sie bevorzugt als innere Gleitmittel und ergeben hohe Transparenz und hohe Ausstoßraten.

Tabelle 2

| Bsp. Nr. | Ausgangsprodukt | | | Reakt.-temp. | Reakt.-zeit | SZ | VZ | Tp | Schmelz-viskos. mPas | Nadel-penetr. | Fließ-härte | Dichte | Vinyl-acetat-gehalt |
| | Vinyl-acetat-gehalt | Schmelz-index | Dichte | | | | | | | | | | |
| | (Gew.-%) | (g/10min) | (g/cm$^3$) | (°C) | (Std.) | (mg KOH/g) | (mg KOH/g) | (°C) | (120°C) | (mm·10$^{-1}$) | (bar) | (g/cm$^3$) | (Gew.-%) |
|---|---|---|---|---|---|---|---|---|---|---|---|---|---|
| 2 | 8 | 0,3 | 0,928 | 165 | 1,2 | 21 | 87 | 99 | 3 500 | 2—3 | 600—650 | 0,960 | — |
| 3 | 9 | 9 | 0,926 | 165 | 0,5 | 14 | 69 | — | 15 800 | 1 | 860 | 0,954 | — |
| 4 | 9 | 9 | 0,926 | 165 | 0,6 | 19 | 84 | 99 | 6 800 | 2—3 | 640 | 0,957 | — |
| 5 | 9 | 9 | 0,926 | 165 | 0,8 | 25 | 95 | 98 | 2 500 | 3—4 | 500 | 0,965 | — |
| 6 | 9 | 9 | 0,926 | 165 | 1,2 | 38 | 114 | 95 | 750 | 4 | 360 | 0,977 | — |
| 7 | 2,5 | 1,4 | 0,924 | 165 | 1,3 | 24 | 56 | 106 | 6 100 | 3—4 | 520—570 | 0,962 | — |
| 8 | 3 | 0,7 | 0,927 | 165 | 1,5 | 27 | 67 | 108 | 8 500 | 3—4 | 500—560 | 0,969 | — |
| 9 | 3 | 0,7 | 0,927 | 150 | 1,8 | 38 | 73 | 105 | 1 200 | 4 | 400—450 | 0,977 | — |
| 10 | 4,5 | 15 | 0,924 | 165 | 0,5 | 21 | 79 | 101 | 4 800 | 4 | 450—500 | 0,954 | — |
| 11 | 4,5 | 120 | 0,923 | 165 | 0,6 | 21 | 79 | 99 | 2 950 | 4 | 400—450 | 0,949 | — |
| 12 | 4,5 | 120 | 0,923 | 165 | 0,8 | 30 | 87 | 96 | 1 100 | 4—5 | 300—350 | 0,957 | — |
| 13 | 10 | 170 | 0,926 | 165 | 0,5 | 14 | 98 | 93 | 3 700 | 4 | 420—470 | 0,952 | — |
| 14 | 10 | 170 | 0,926 | 165 | 0,6 | 19 | 115 | 92 | 2 640 | 5 | 260—290 | 0,954 | — |
| 15 | 13 | 3 | 0,934 | 150 | 1,6 | 15 | 113 | 98 | 2 800 | 2 | 800—850 | 0,960 | 12,8 |
| 16 | 13 | 3 | 0,935 | 150 | 2,1 | 25 | 129 | 97 | 1 100 | 4 | 400—450 | 0,975 | 12,5 |
| 17 | 20 | 3 | 0,940 | 150 | 1,6 | 14 | 168 | 93 | 3 100 | 2—3 | 700 | 0,966 | 19,6 |
| 18 | 20 | 3 | 0,940 | 150 | 1,9 | 22 | 175 | 88 | 1 680 | 4 | 400 | 0,979 | 19,0 |

Fortsetzung

| Bsp. Nr. | Ausgangsprodukt | | | Reakt.-temp. | Reakt.-zeit | SZ | VZ | Tp | Schmelz-viskos. mPas | Nadel-penetr. | Fließ-härte | Dichte | Vinyl-acetat-gehalt |
| | Vinyl-acetat-gehalt | Schmelz-index | Dichte | | | | | | | | | | |
| | (Gew.-%) | (g/10min) | (g/cm$^3$) | (° C) | (Std.) | (mg KOH/g) | (mg KOH/g) | (° C) | (120° C) | (mm· 10$^{-1}$) | (bar) | (g/cm$^3$) | (Gew.-%) |
|---|---|---|---|---|---|---|---|---|---|---|---|---|---|
| 19 | 20 | 10 | 0,940 | 150 | 1,5 | 15 | 154 | 92 | 2 500 | 3—4 | 500 | 0,968 | 19,5 |
| 20 | 28 | 25 | 0,950 | 150 | 1,2 | 10 | 205 | 92 | 6 600 | 4 | 400—450 | 0,967 | 27,5 |
| 21 | 28 | 25 | 0,950 | 150 | 1,6 | 15 | 218 | 86 | 3 390 | 6 | 200—250 | 0,977 | 27,4 |

0 028 384

**0 028 384**

### Vergleichsbeispiel a)

Ein niedermolekulares Ethylen-Vinylacetat-Copolymerisat mit einem Vinylacetatgehalt von 8 Gew.-%, einer Schmelzviskosität von 920 mPas (120° C), einer Molekülmasse von 4580 und einer Dichte von 0,930 g/cm$^3$ wird gemäß DD-PS 116 625, Beispiel 21, in der Schmelze unter kontinuierlicher Zugabe von 15 ml Wasser/Stunde/kg Copolymerisat oxidiert. Ein Katalysator kommt nicht zur Anwendung. Es wird ein weiches schmieriges Oxidat der Säurezahl 17 erhalten, das eine Verseifungszahl von 103, einen Tropfpunkt von 87° C und eine Nadelpenetration von 21 mm · 10$^{-1}$ besitzt. Wegen fehlender Härte ist das Produkt beispielsweise zur Herstellung brauchbarer Putzmittelemulsionen ungeeignet.

### Vergleichsbeispiel b)

Ein höhermolekulares Ethylen-Vinylacetat-Copolymerisat mit einem Vinylacetatgehalt von 10 Gew.-%, einem Schmelzindex von 370 g/10 min und einer Dichte von 0,926 g/cm$^3$ wird gemäß DE-PS 116 625, Beispiel 25, oxidiert. Man arbeitet ebenfalls in der Schmelze und gibt kontinuierlich 27 ml Wasser/Stunde/kg Copolymerisat zu. Als Katalysator ist das Mangan-Zinn-Salz einer Fettsäure anwesend. Nach 8 Stunden Reaktionszeit kann kein merklicher Säurezahlanstieg festgestellt werden. Danach vernetzt das Produkt zu einer unschmelzbaren, verfärbten, unbrauchbaren Masse.

### Beispiele 22 bis 26

Ein Gemisch aus gleichen Teilen eines Ethylen-Vinylacetat-Copolymerisates (Vinylacetatgehalt 8 Gew.-%, Schmelzindex 2,5 g/10 min, Dichte 0,928 g/cm$^3$) und eines Ethylen-Homopolymerisates (Schmelzindex 18 g/10 min, Dichte 0,918 g/cm$^3$) wird wie im Beispiel 2 beschrieben oxidiert. Es werden die in Tabelle 3 zusammengestellten Ergebnisse erhalten.

Die Produkte lassen sich zu Emulsionen verarbeiten, die zu harten, abriebfesten, hochglänzenden Filmen auftrocknen. Die Filme wiesen eine geringe Stippigkeit und eine höhere Rutschfestigkeit auf als Filme bekannter Oxidate.

Tabelle 3

| Beisp. Nr. | Reaktionszeit (Stunden) | Säurezahl (mg KOH/g) | Verseifungszahl (mg KOH/g) | Tropfpunkt (° C) |
|---|---|---|---|---|
| 22 | 0,7 | 16 | 49 | 105 |
| 23 | 0,75 | 18 | 58 | 104 |
| 24 | 0,8 | 21 | 60 | 103 |
| 25 | 0,86 | 25 | 64 | 103 |
| 26 | 1 | 29 | 76 | 103 |

Tabelle 3 (Fortsetzung)

| Beisp. Nr. | Schmelz-viskosität mPas (120° C) | Nadel-penetration (mm · 10$^{-1}$) | Fließhärte (bar) | Dichte (g/cm$^3$) | Farbe |
|---|---|---|---|---|---|
| 22 | 4 870 | 3—4 | 470—530 | 0,952 | weiß |
| 23 | 3 090 | 3—4 | 490—520 | 0,956 | weiß |
| 24 | 2 120 | 4 | 430—450 | 0,960 | weiß |
| 25 | 1 600 | 3 | 560—590 | 0,965 | weiß |
| 26 | 1 290 | 3 | 530—560 | 0,968 | weiß |

9

**0 028 384**

Beispiele 27 bis 30

Jeweils 1 kg verschiedener Copolymerisate aus Ethylen und Acrylsäure bzw. Acrylsäureester werden wie im Beispiel 1 angegeben, jedoch ohne Zusatz eines früheren Oxidates, bei 165°C oxidiert. Die Ausgangsprodukte und die Ergebnisse zeigt Tabelle 4.

Tabelle 4

| Beisp. Nr. | Ausgangsprodukt | | | Reaktions- zeit | SZ |
|---|---|---|---|---|---|
| | Acrylsäure- gehalt | Schmelzindex | Dichte | | |
| | (Gew.-%) | (g/10min) | (g/cm$^3$) | (Std.) | (mg KOH/g) |
| 27 | 3,5 | 11 | 0,925 | 0,75 | 60 |
| 28 | 8 | 5,5 | 0,932 | 1 | 72 |
| 29 | 12*) | 7 | 0,937 | 0,75 | 58 |
| 30 | 20 | 200 | 0,949 | 0,5 | 162 |

*) davon die Hälfte als Acrylsäure-tert.-butylester vorliegend

Tabelle 4 (Fortsetzung)

| Beisp. Nr. | VZ | Tp | Schmelz- viskosität mPas | Nadel- penetration | Fließ- härte | Dichte |
|---|---|---|---|---|---|---|
| | (mg KOH/g) | (°C) | (120°C) | (mm · 10$^{-1}$) | (bar) | (g/cm$^3$) |
| 27 | 81 | 101 | 400 | 3 | 450–500 | 0,971 |
| 28 | 86 | 103 | 5 820 | 4–5 | 350–400 | 0,963 |
| 29 | 76 | 100 | 730 | 4 | 400–450 | 0,969 |
| 30 | 179 | 86 | 6 080 | 5 | 250 | 0,988 |

Beispiel 31

300 g des nach Beispiel 1 erhaltenen Oxidates mit der Säurezahl 48 (Probe 8) werden verestert, indem man sie in der Schmelze bei einer Temperatur von 125°C mit 11,7 g n-Propanol unter Zusatz katalytischer Mengen Schwefelsäure verrührt. Es wird ein helles Esterwachs erhalten mit der Säurezahl 14, der Verseifungszahl 117 und dem Tropfpunkt 91°C. Das Wachs eignet sich hervorragend zur Herstellung von Emulsionen und Pasten oder als Gleitmittel für die Kunststoffverarbeitung.

Beispiel 32

50 g der in Beispiel 1 erhaltenen Probe 6 mit der Säurezahl 28 werden verseift, indem man sie im geschmolzenen Zustand bei einer Temperatur von 130°C mit 1 g Calciumhydroxid verrührt. Es entsteht eine helle Wachsseife mit der Säurezahl 6, der Verseifungszahl 74 und dem Tropfpunkt 104°C, die als überwiegend inneres Gleitmittel bei der PVC-Verarbeitung einsetzbar ist.

10

**0 028 384**

Beispiele 33 bis 35

Diese Beispiele zeigen die sich beim Einsatz der neuen Oxidate als Wachskomponente in Pflegemitteln ergebenen Vorteile.

Beispiel 33

Lösemittelhaltige Paste (Bohnerwachs, Schuhcreme)

In 80,0 Gew.-Teilen Testbenzin wurden bei ca. 70° C

| 4,0 Gew.-Teile | eines oxidierten Ethylen-Vinylacetat-Copolymerisates der SZ 18 und der Verseifungszahl 85 (erhalten aus einem Copolymerisat mit einem Vinylacetatgehalt von ca. 8%), |
| 4,0 Gew.-Teile | plastisches, mikrokristallines Wachs und |
| 12,0 Gew.-Teile | Tafelparaffin mit Schmelzpunkt 60 bis 62° C |

gelöst.

Nach dem Abkühlen unter Rühren wurden 100,0 Gew.-Teile pastenförmige Lösemittelware erhalten (Paste A).

Zu Vergleichszwecken wurden Pasten aus einem nichtoxidierten Polyethylenwachs vom Molekulargewicht ca. 3000 und einer Fließhärte von ca. 600 kg/cm² (Paste B), aus einem nichtoxidierten Polyethylenwachs vom Molekulargewicht ca. 1500 und einer Fließhärte von ca. 300 kg/cm² (Paste C) und aus einem oxidierten Polyethylenwachs mit der Säurezahl 18, einem Molgewicht von ca. 1700 und einer Fließhärte von ca. 250 kg/cm² (Paste D) hergestellt.

Die anwendungstechnischen Eigenschaften der Pasten zeigt Tabelle 5.

Tabelle 5

| Eigenschaft | Paste nach Beispiel | | | |
|---|---|---|---|---|
| | 33 A | 33 B | 33 C | 33 D |
| Pastenhärte (g/cm²) | 650 | 580 | 260 | 610 |
| Begeheigenschaften auf Linoleum | | | | |
| Schmutzaufnahme | gering | gering | hoch | gering |
| Rutschfestigkeit (subjektiv) | sehr gut | schlecht | gut | mäßig |
| Haftreibungskoeffizient*) | | | | |
| mit Metallschuh | 0,56 | 0,42 | 0,54 | 0,50 |
| mit Lederschuh | 0,63 | 0,48 | 0,59 | 0,57 |

*) Bestimmung des Haftreibungskoeffizienten nach der in der Zeitschrift »Fette, Seifen, Anstrichmittel« 76 (1974), Seiten 163—169 in dem Aufsatz von R. Braun und B. Roemer »Einfluß von Wachsen auf Haft- und Gleitreibung« beschriebenen Methode.

Beispiel 34

Selbstglanzemulsion (Auftragsweise unverdünnt)

Es wurde zunächst eine 18%ige Wachsemulsion hergestellt, indem man eine 130° C heiße Schmelze aus

| 15,0 Gew.-Teilen | des in Beispiel 33 genannten Wachses in Gegenwart von |
| 3,0 Gew.-Teilen | Isotridecylpolyglykolether (mit 8 Mol Ethylenoxid) mit |
| 0,5 Gew.-Teilen | 43%iger KOH verseifte, die Schmelze in |

81,5 Gew.-Teilen siedendes Wasser einrührte und anschließend schnell auf Raumtemperatur abkühlte. Es entstanden

100,0 Gew.-Teile   Wachsemulsion (Emulsion A).

Zum Vergleich wurden Emulsionen aus einem oxidierten Polyethylenwachs mit SZ 27, einem Molekulargewicht von ca. 5000 und einer Fließhärte von ca. 800 kg/cm² (Emulsion B) sowie einem oxidierten Polyethylenwachs mit SZ 18, einem Molekulargewicht von ca. 1500 und einer Fließhärte von ca. 250 kg/cm² (Emulsion C) bereitet.

Je 30 Gew.-Teile der erhaltenen Wachsemulsion wurden bei Raumtemperatur zu gebrauchsfertigen Selbstglanzemulsionen durch einfaches Zusammenrühren mit den nachstehenden Komponenten in der angegebenen Menge und Reihenfolge rezeptiert.

| | |
|---|---|
| 30,0 Gew.-Teile | Wachsemulsion A, B oder C mit 18% Festkörper, |
| 5,0 Gew.-Teile | alkalische Netzharzlösung (Kolophonium-Maleinat-Harz), 15%ig, |
| 70,0 Gew.-Teile | Acrylat-Copolymerdispersion mit einer Filmbildetemperatur von ca. 55° C, 15%ig, |
| 2,2 Gew.-Teile | Ethyldiglykol, |
| 0,7 Gew.-Teile | Tributoxyethylphosphat, |
| 0,7 Gew.-Teile | Dibutylphthalat, |
| 1,0 Gew.-Teile | wäßrige 1%ige Lösung eines Fluortensides |
| 109,6 Gew.-Teile | Selbstglanzemulsion |

Die Emulsionen wurden unverdünnt auf PVC aufgetragen in einer Menge von 20 ml/m².

Tabelle 6

| Eigenschaft des Wachsfilmes | Pflegemittelemulsion nach Bsp. | | |
|---|---|---|---|
| | 34 A | 34 B | 34 C |
| Schmutzaufnahme | wenig | sehr wenig | stark |
| Rutschfestigkeit (subjektiv) | sehr gut | schlecht | gut |
| Haftreibungskoeffizient | | | |
| mit Metallschuh | 0,62 | 0,49 | 0,52 |
| mit Lederschuh | 0,76 | 0,68 | 0,71 |

## Beispiel 35

### Wischwachs (Auftragsweise bis 1 : 100 verdünnt mit Wasser)

Die nach Beispiel 34 primär hergestellten Wachsemulsionen wurden bei Raumtemperatur zu Wischwachs-Konzentraten durch einfaches Zusammenrühren der nachstehenden Komponenten in der angegebenen Menge und Reihenfolge rezeptiert.

| | |
|---|---|
| 50,0 Gew.-Teile | Wachsemulsion A, B oder C mit 18% Festkörper, |
| 39,0 Gew.-Teile | Wasser, |
| 2,0 Gew.-Teile | Natriumtetraborat-10-hydrat (Borax), |
| 9,0 Gew.-Teile | Nonylphenolpolyglykolether mit 10 Mol Ethylenoxid |
| 100,0 Gew.-Teile | Wischwachskonzentrat |

Zur Beurteilung der Gleitsicherheit auf PVC wurden die Konzentrate 1 : 100 mit Wasser verdünnt und 20 ml der Verdünnung pro m² PVC-Boden verteilt.

Hieraus errechnen sich 14 mg eingesetztes Wachs pro m² Fläche bzw. eine Schichtdicke des Wachsfilmes von 0,000014 mm. Ungeachtet der niedrigen Einsatzmengen ergaben sich in den angesprochenen Filmeigenschaften folgende Unterschiede:

0 028 384

Tabelle 7

| Eigenschaft des Wischwachs-filmes | Wischwachs aus Waschemulsion nach Beispiel | | |
|---|---|---|---|
| | 34 A | 34 B | 34 C |
| Rutchfestigkeit (subjektiv) | gut | schlecht | mäßig |
| Haftreibungskoeffizient | | | |
| mit Metallschuh | 0,38 | 0,32 | 0,36 |
| mit Lederschuh | 0,58 | 0,52 | 0,55 |

**Patentansprüche**

1. Leicht verarbeitbare, polare Wachse mit Tropfpunkten über 80 und unter 110°C, Nadelpenetrationszahlen von unter 10 mm · 10⁻¹ [bestimmt nach DGF-M-III 9b (75)] und Säurezahlen bis zu 200, erhalten durch Oxidation von Copolymerisaten des Ethylens, in denen neben diesem 0,5 bis 50 Gewichts-% andere olefinische, jedoch sauerstoffhaltige Gruppen enthaltende Monomere einpolymerisiert sind, und welche Schmelzindices zwischen 0,01 und 400 g/10 min [bestimmt nach DIN 53 735 bei 190°C und einem Auflagegewicht von 2,16 kp (MFI 190/2)] besitzen, in an sich bekannter Weise durch Reagierenlassen ihrer in einem gegenüber Sauerstoff inerten Dispersionsmittel dispergierten Schmelze, bei Temperaturen zwischen ihrem Schmelzpunkt und 100°C darüber, bei einem Überdruck zwischen 0 und 100 bar und gegebenenfalls in Gegenwart von Netzmitteln und/oder Katalysatoren unter ständigem intensiven Vermischen mit Sauerstoff oder sauerstoffhaltigen Gasen, gewünschtenfalls nach einer Nachbehandlung der derart gewonnenen Oxidate, die in einer teilweisen oder vollständigen Veresterung, Verseifung, Amidierung, Umesterung, Hydrolyse oder Nachoxidation bestand.

2. Wachse nach Anspruch 1, dadurch gekennzeichnet, daß sie aus einem Ethylen-Vinylacetat-Copolymerisat mit einem Vinylacetatgehalt von 1 bis 30 Gew.-% und einem Schmelzindex von 0,1 bis 200 g/10 min erhalten worden waren.

3. Verwendung von nach den Ansprüchen 1 und 2 erhaltenen Oxidaten von Ethylen-Vinylacetat-Copolymerisaten mit Säurezahlen von 10 bis 50 und Schmelzviskositäten bei 120°C von 500 bis 20 000 mPas als Wachskomponente in Pflegemitteln auf wäßriger und/oder organischer Lösemittelbasis und in Pasten.

4. Verwendung nach Anspruch 3, dadurch gekennzeichnet, daß die eingesetzte Oxidatmenge 0,01 bis 50 Gew.-%, bezogen auf fertiges Pflegemittel, beträgt.

5. Wachshaltige Pflegemittel in Form von Dispersionen auf wäßriger und/oder organischer Lösemittelbasis oder von Pasten, deren Wachsgehalt 0,01 bis 50 Gew.-% beträgt und die weitere, in derartigen Pflegemitteln übliche Bestandteile enthalten, und aus welchen nach dem Auftrocknen strapazierfähige und besonders rutschfeste Filme resultieren, dadurch gekennzeichnet, daß das Wachs ein nach den Ansprüchen 1 oder 2 erhaltenes ist.

**Claims**

1. Easily processable, polar waxes having dropping points above 80 and below 110°C, needle penetration indices below 10 mm · 10⁻¹ [according to DGF-M-III 9b (75)] and acid numbers of up to 200, obtained by the oxidation of ethylene copolymers, in which, in addition to ethylene, 0.5 to 50% by weight of other monomers which are olefinic but contain oxygen-containing groups are copolymerized, having melt indices between 0.01 and 400 g/10 minutes [[according to DIN 53 735 at 190°C (and a load of 2,16 kp (MFI 190/2)], in known manner by reacting a melt of the polymer, dipersed in a dispersing agent which is inert towars oxygen, at temperatures between the melting point of the polymer and 100°C above the latter, at an excess pressure between 0 and 100 bars and, if appropriate, in the presence of wetting agents and/or catalysts, with continous intensive mixing with oxygen or oxygen-containing gases and, if desired, subjecting the thus obtained oxidation products to an after-treatment, which consists of partial or complete esterification, saponification, amidation, transesterification, hydrolysis or subsequent oxidation.

2. Waxes as claimed in claim 1, obtained from an ethylene vinyl acetate copolymer having a vinyl acetate content of 1 to 30% by weight and a melt index of from 0,1 to 200 g/10 minutes.

3. Use of the oxidation products obtained according to claims 1 or 2 from ethylene vinyl acetate

**0 028 384**

copolymers having acid numbers of from 10 to 50 and melt viscosities at 120°C of from 500 to 20 000 mPs as the wax component in water-based and/or organic solvent-based polishes and in pastes.

4. Use as claimed in claim 3, wherein the amount of oxidation product used is 0.01 to 50% by weight, relative to the finished polish.

5. Wax-containing polishes in the form of water-based and/or organic solvent-based dispersions or in the form of pastes, which have a wax content of 0.01 to 50% by weight and contain the other constituents customary in polishes of these types, and which, after drying, result in durable and particularly non-slip films, wherein the wax component according to claims 1 or 2 is used.

**Revendications**

1. Cires polaires faciles à mettre en œuvre, ayant des points de goutte supérieurs à 80°C et inférieurs à 110°C, des indices de pénétration à l'aiguille inférieurs à 10 mm · 10$^{-1}$ [déterminés par la méthode DGF-M-III 9b (75)] et des indices d'acide pouvant aller jusqu'à 200, obtenues par oxydation de copolymères de l'éthylène dans lesquels sont incorporés par polymérisation, en plus de l'éthylène, de 0,5 à 50% en poids d'autres monomères éthyléniques de ceux renfermant des radicaux oxygénés, et qui ont des indices de fusion compris entre 0,01 et 400 g/10 minutes [déterminés selon la norme DIN 53 735 à 190°C et avec une charge de 2,16 kg (MFI 190/2)], de manière connue, par réaction de leur masse fondue dispersée dans un milieu dispersant inerte à l'égard de l'oxygène, à des températures comprises entre leur point de fusion et une température supérieure de 100°C à ce point de fusion, sous une surpression comprise entre 0 et 100 bar et éventuellement en présence de mouillants et/ou de catalyseurs, tout en mélangeant constamment et énergiquement avec de l'oxygène ou des gaz contenant de l'oxygène, éventuellement après un traitement complémentaire des produits d'oxydation ainsi obtenus qui consiste en une estérification partielle ou totale, en une saponification, en une amidation, en une transestérification, en une hydrolyse ou une oxydation complémentaire.

2. Cires selon la revendication 1 caractérisées en ce qu'elles ont été préparées à partir d'un copolymère éthylène/acétate de vinyle dont la teneur en acétate de vinyle est de 1 à 30% en poids et dont l'indice de fusion est compris entre 0,1 et 200 g/10 minutes.

3. Application de produits d'oxydation, selon l'une des revendications 1 et 2, de copolymères éthylène/acétate de vinyle ayant des indices d'acide de 10 à 50 et des viscosités à l'état fondu, à 120°C, de 500 à 20.000 mPa · s, comme composantes cireuses dans des produits d'entretien à base d'eau et/ou de solvants organiques et dans des pâtes.

4. Application selon la revendication 3 caractérisée en ce que la quantité de produit d'oxydation mise en jeu est comprise entre 0,01 et 50% en poids par rapport au produit d'entretien fini.

5. Produits d'entretien contenant une cire, sous la forme de dispersions à base d'eau et/ou de solvants organiques ou de pâtes, dont la teneur en cire est comprise entre 0,01 et 50% en poids et qui contiennent d'autres constituants usuels dans des produits d'entretien de ce genre, et à partir desquels on obtient, après séchage, des feuils résistant à l'usage et particulièrement antidérapants, produits d'entretien caractérisés en ce que la cire est une cire selon l'une des revendications 1 et 2.